# EUROPEAN PATENT SPECIFICATION

(11) **EP 2 373 463 B1**
(45) Date of publication and mention of the grant of the patent: **02.03.2016**
(21) Application number: 09831517.9
(22) Date of filing: 30.11.2009
(51) Int. Cl.: B27D 1/04, B32B 21/14, B32B 27/20, C08G 12/38

(54) **A METHOD FOR PREPARING A WOOD VENEER PLATE**
VERFAHREN ZUR HERSTELLUNG EINER HOLZFURNIERPLATTE
PROCÉDÉ DE PRÉPARATION D'UN PANNEAU EN FEUILLES MINCES DE BOIS

(30) Priority: 08.12.2008 FI 20086176
(43) Date of publication of application: 12.10.2011
(73) Proprietor: Metsäliitto Osuuskunta, 02020 Metsä (FI); Dynea Austria GmbH, 3500 Krems (AT)
(72) Inventor: SOKKA, Kasperi, FI-40520 Jyväskylä (FI); SILVENTOINEN, Ilpo, FI-59800 Kesälahti (FI); PORKKA, Merja, FI-49410 Poitsila (FI); LEPISTÖ, Harri, FI-48600 Kotka (FI); HAVUAHO, Seppo, FI-48800 Kotka (FI); EKMAN, Jussi, FI-40270 Palokka (FI)
(74) Representative: Seppo Laine Oy
(86) International application number: PCT/FI2009/050961
(87) International publication number: WO 2010/066944

(56) References cited:
- GB-A- 1 353 546
- GB-A- 1 353 546
- JP-A- 2000 143 751
- US-A- 3 470 134
- US-A- 3 470 134
- US-A1- 2003 201 054
- CONROD KEVIN GROVES: "New Method for Online Measurement of Veneer Glue Distribution", SECOND INTERNATIONAL SYMPOSIUM ON VENEER PROCESSING AND PRODUCTS, MAY 09-10, 2006, VANCOUVER, BC, CANADA, XX, CA, 9 May 2006 (2006-05-09), pages 1-6, XP008143786,
- WALKER JOHN C F ED - WALKER J C F: "Primary wood processing : principles and practice, passage", 1 January 2006 (2006-01-01), PRIMARY WOOD PROCESSING: PRINCIPLES AND PRACTICE (SECOND EDITION), SPRINGER, PAGE(S) 412 - 414, XP008143789, ISBN: 1-4020-4392-9 * the whole document *
- JUVONEN N. ET AL: 'Mekaaninen metsateollisuus 1, Vaneriteollisuus, Ammattikasvatushallitus, Suomen Puuteollisuusinsinoorien Yhdistys r.y. Valtion painatuskeskus' 1985, pages 27 - 37, 111 - 115, 118 - 120
- WALKER J.: 'Primary Wood Processing, Principles and practice, 2nd edition', 2006, SPRINGER article SHI S. ET AL: 'Wood-Based Composites: Plywood and veneer-based products', pages 412 - 414, XP008143789
- GROVES C.: 'New Method for Online Measurement of Veneer Glue Distribution, Dai, C.' PROCEEDINGS OF THE SECOND INTERNATIONAL SYMPOSIUM VENEER PROCESSING AND PRODUCTS, FORINTEK CANADA CORP. 2006 09 May 2006 - 10 May 2006, VANCOUVER, B.C., CANADA, page 400, XP008143786

## Description

The invention relates to a method for preparing a wood veneer plate. In the method, wood veneer surfaces are coated with resin. Then, wood veneers are piled on top of each other and, finally, they are pressed together for curing the resin.

Wood veneer plates are usually prepared by cutting or rotary-cutting wood into veneer. Before the cutting or rotary-cutting, sawn and barked wood is steamed or soaked to increase the temperature of wood in order for it to plasticise. The normal veneer thickness is about 0.5-5 mm. The veneers are dried, sorted and possibly plugged. Then, the veneers are coated with resin and assembled into plates. The plates are heated and pressed, whereby the resin cures and binds the veneers together. Finally, the plates are trimmed, polished and sorted.

In prior art, veneers are coated with resin and assembled such that the resin is applied on both sides of every second veneer and, except for one outer surface, on one side of each veneer, the veneers are placed on top of each other and the resin is cured by pressing and heating. Most common resins are phenol-formaldehyde resin and urea-formaldehyde resin. Melamine-formaldehyde resin is also used, particularly when strength and clearness are required of the glued joint.

It is also known to impregnate a completed veneer plate to improve its stability, fire resistance, appearance, dimension stability and processibility. Then, micromolecule phenol-formaldehyde resin is often used, which has the particular property of penetrating the cell walls of wood and reacting to decrease the hygroscopicity of wood (Kirk-Othmer, 3rd Ed., Vol. 14, pp. 10-15).

It is a requirement of the wood veneer plate that the strength of the joint between the veneers is sufficient. Only if breaking occurs in the wood and not in the glued joint when breaking off veneers from each other, the joint is strong enough. Strong resin glue as such does not guarantee that the breaking occurs in the wood. If there are weakening points, such as rotary-cut splits, in the wood veneer, the glue does not adhere or is excessively soaked in the wood and the breaking occurs in the glued joint.

Traditionally, wood veneer plates improved by impregnating have been prepared in the following way. First, dried wood veneers are enforced by impregnating them with impregnation resin which is absorbed within the veneer. Then, the impregnated wood veneers are dried, which is followed by coating them with resin glue. The resin glue is traditionally applied on both sides of every second veneer and, when piling the veneers, the coated veneer is placed between two uncoated veneers. Lastly, the piled veneer stack is prepressed and finally pressed in increased temperature for curing the resin glue.

GB 1353546 A, for example, discloses a composition including polyethylenimine and/or substituted polyetylenimine and a polymer bearing an average of more than one acid group per polymer chain. Plywood, for example, may be manufactured by apply a coating of such adhesive formulation on one or both substrates to be bonded.

US 3 470 134 A on the other hand discloses a preparation method of a melamine-formaldehyde resin, which is useful as and impregnant for laminated products such as decorative surfaces. In such laminate production, resin-impregnated paper sheets or alpha-cellulose core material are to be bonded together.

US 2003/201054 A1 discloses a method for making a multiple-ply panel having a resinated core between two sheets of green wood veneer. In particular, a multiple-ply panel based on a core made of a resinated mat, whereby the core is preimpregnated. Application of an adhesive to an inner face of the sheets or alternatively to the resonated mat is proposed.

Conrod K. G. proposes in "New Method for Online Measurement of Veneer Glue Distribution" (Second international symposium on veneer processing and products; May 09-10, 2006, Vancouver, BC, Canada) an online measurement of veneer glue distribution by using a near infra-red camera. The measurement is used to detect problems with glue distribution in real time.

Walker J. C. F. discloses in "Primary wood processing: principles and practice" (2nd edition, 1 January 2006, Springer, pp. 412-414, XP008143789, ISBN: 1-4020-4392-9) a method for the manufacture of plywood, where a double-roll coater is used to apply glue on both sides of a veneer.

Wood veneer plates prepared by traditional methods are not as strong as required. The breaking still occurs in the glued joint, not in the wood. Furthermore, separate impregnation and drying take too much time. Replacing them by increasing the dosage of resin glue did not succeed either. It was found in the tests that the wood break of the wood veneer plate (share of an off-broken surface) or its strength was not improved even though the dosage of resin glue was more than doubled.

The object of the invention is to provide a preparing method of a wood veneer plate which produces strong veneer but avoids awkward work stages. As mentioned at the beginning, in the invention, resin is applied on wood veneer surfaces, the wood veneers are piled on top of each other and hot pressed together for curing the resin.

### Summary

Said object is now mainly achieved by applying resin on not preimpregnated wood veneer surfaces which face each other when piled i.e. on both surfaces forming the same joint. Resin is applied on at least 50%, advantageously at least 75%, most advantageously 100% of the surfaces facing each other when piled and forming a glued joint when hot-pressed together.

More specifically the method according to the present invention is characterized by the characterizing portion of claim 1.

Considerable benefits are gained with aid of the proposed solution.

Applying the resin on facing joint surfaces thus intensifies its absorption in the veneers and results in a stronger joint than the above-mentioned traditional preimpregnation of veneer and/or increasing the dosage of resin only on one joint surface according to prior art.

### Detailed description of exemplary embodiments

Even though the gluing of facing surfaces according to the invention could be performed for preimpregnated veneers, preimpregnation is herein proposed to be omitted. The gluing of facing surfaces plugs and strengthens the veneers better than the combination of preimpregnation and one-sided gluing according to prior art. Thus, it is advantageous that the facing surfaces on which resin is applied are non-impregnated i.e. of wood which is raw or pre-processed in some other way than by impregnating.

On each surface facing each other when piled is applied advantageously 100-300 g/m², most advantageously 155-175 g/m² of resin. For a joint is thus used 200-600 g/m², advantageously 310-350 g/m² of resin. These amounts have been experimentally found the best. The thickness of wood veneers employed in the invention is advantageously 0.5-5.0 mm, most advantageously 1.0-3.5 mm. The number of wood veneers is advantageously 3-70, most advantageously 12-24, and they are advantageously chosen of birch, aspen, pine and spruce or other wood species suitable for the method. The most advantageous wood species is birch.

In the invention, resin is applied on facing surfaces. In this context, resin refers to unmixed resin or a mixture substantially containing it. Resin is typically applied on wood veneer surfaces by spraying, casting, foaming, using liquid extrusion and/or by using rolls. The most advantageous coating method is application by means of rolls. In the invention, on surfaces facing each other is typically applied resin which is chosen from the group of heat-setting resins. Heat-setting resins include phenolic resins (reaction product of phenol, *o*-, *m-* and *p*-cresol, *p*-t-butyl phenol, *p*-octyl phenol, *p*-nonyl phenol, *p*-phenyl phenol, bisphenol-A and/or resorcinol with formaldehyde, acetaldehyde, paraldehyde, glyoxal and/or fural) and amino resins (reaction product of melamine, urea, benzoguanamine, dihydroxy ethylene urea, aniline and/or acrylamide with formaldehyde).

Advantageous resins are melamine resin i.e. the reaction product of melamine and formaldehyde and urea melamine resin i.e. the reaction product of urea, melamine and formaldehyde. Totally superior results are obtained with melamine resin, see examples. When using melamine resin, it is advantageously in the form of aqueous solution. The solids content of the aqueous solution is advantageously 45-70% by weight, most advantageously 55-65% by weight. The mole ratio of formaldehyde and melamine in melamine resin is preferably between 1.4-3.0 and, according to an embodiment, the resin has been modified with acetoguanamine, caprolactam, urea and/or glycol.

If required, it is possible to include a catalyst in the resin which facilitates the curing of the resin when hot pressing. The resin can also contain a filler. Typical fillers are inorganic fillers, such as chalk and kaoline, and organic fillers, such as wood flour, cellulose, starch and protein. The most advantageous filler is soy flour belonging to proteins. Mixtures of these fillers can also be employed. The amount of the filler is adjusted such that the viscosity of the mixture is obtained suitable, advantageously between 10-60 s, most advantageously between 20-40 s (Ford cup 6/20°C). Furthermore, the resin can contain other ingredients, such as anti-microbe, anti-insect, anti-moisture and fire-resistant materials.

The method described above can include other stages in addition to said stages. After having applied the resin, the glued veneers are let to stand without pressure. After piling and before hot pressing, the veneers are advantageously prepressed, advantageously for 5-40 minutes in the temperature of 10-40°C and the pressure of 0.1-1.0 MPa. The hot pressing of wood veneers piled on top of each other for curing the resin according to the invention is performed advantageously for 5-40 minutes in the temperature of 100-140°C and the pressure of 1-3 MPa. Finally, the plates can be trimmed, polished and sorted.

Next, an exemplifying embodiment will be described with the sole purpose of illustrating the invention.

### Example

The raw material was birch veneer with the thickness of 1.5 mm, aqueous solution of melamine resin with the pH of 9.5, with the viscosity of 77 mPas/20°C and the dry content of (1 g, 3 h, 105°C) 62% by weight, and a filler.

The impregnation gluing mixture was prepared by mixing together 100 portions of the aqueous solution of melamine resin and 6 portions of the filler. Then, the resin content was 59% by weight, the dry content 64% by weight and the viscosity 30 s (Ford cup 6/20°C).

165 g/m² of the impregnation gluing mixture was applied on all surfaces of all veneers except for the outer surface of the plate. There were 13 pieces of veneers per plate.

After the gluing, the veneers were piled into preform panels. The duration of the gluing and the following letting to stand was about 20 minutes. The preform panels were prepressed for 8-10 minutes in the pressure of 0.8 MPa. The web time i.e. the time between prepressing and hot pressing was about 30-100 minutes. The duration of hot pressing was 25 minutes and took place in the temperature of 125°C and the maximum pressure of 1.8 MPa. The completed plate was recovered for testing.

As a comparison, two plates of the same size were used, which were prepared by applying a gluing mixture based on phenol-formaldehyde resin on both sides of every second veneer, by assembling the veneers such that the glued veneer remains between two unglued veneers and by pressing the veneers together.

The tables enclosed in this specification show the preparing and properties of veneer plates according to the invention and according to prior art.

As it is evident from the test description and the tables, better veneer properties are obtained when all veneers are coated with resin, particularly when the resin is melamine resin.

**Tables: Used resin compositions, pressing conditions and strength results in the method according to prior art and according to the invention**

| **Veneer impregnation, test 6 M** | |
|---|---|
| surface veneers not glued MF = melamine formaldehyde, PF = phenol formaldehyde, PRF = phenol resorcinol formaldehyde | |
| **Resin composition** | **Mixture 1** |
| MF resin | 1,000 g |
| Soy flour | 60 g |
| | 1,060 g |
| Resin % | 57.5 |
| Curing time, 100°C, 2 h | 6 min 30 s |
| Viscosity Fc 6 / 25°C | 25-35s |
| Viscosity when gluing (2 h) | 34.6 s |

| **1. gluing** | | | | | | | | |
|---|---|---|---|---|---|---|---|---|
| | Assembly | 13 * 1.4 mm birch veneer | | | | | | |
| | Veneer | about 3% | | | | | | |
| | moisture (%) | | | | | | | |
| | Gluing | **All veneers glued** | | | | | **Every second glued** | |
| | Roll | **200 g/m²** | | | **170 g/m²** | | **150 g/m²** | **250 g/m²** |
| | application | | | | | | | |
| | Piling + open time from rolling to prepressing, min | 20/40 | | | 20 | | 20 | 40 |
| | Prepressing | 0.8MPa/10min | | | | | | |
| | Hot pressing | 125°C | | 1.8 MPa | 1.1 MPa | 0.4 MPa | | |
| | | **25 min** (total | | **8 min** | **13 min** | 4 **min** | | |
| | | time) | | (time in pressure) | (time in pressure) | (time in pressure) | | |

| **Gluing results** | | | | | | | |
|---|---|---|---|---|---|---|---|
| | | | | | **Class 1, middle joint** | | |
| Plate | Application | Piling + open, | Web time | Pressing | Shearing strength | | Splinter i.e. break in wood |
| No. | g/m² | min | min | min | X N/mm² | Sx Standard deviation | X % of all breaks |
| 1 | 200 | 20 | 36 | 25 | 4.72 | 0.72 | 97 |
| 2 | all | 20 | 39 | | 4.7 | 0.39 | 87 |
| **mean value** | | | | | **4.71** | **0.6** | **93** |
| 3 | 200 all | 40 | 1:11 | 25 | 4.74 | 0.47 | 100 |
| 4 | 170 | 20 | 47 | 25 | 3.92 | 0.55 | 97 |
| 5 | all | 20 | 52 | | 4.78 | 0.36 | 97 |
| **mean value** | | | | | **4.46** | **0.6** | **97** |
| 6 | 150 | 20 | 1:19 | 25 | 4.26 | 0.32 | 93 |
| 7 | all | 20 | 1:30 | | 4.89 | 0.74 | 97 |
| **mean value** | | | | | **4.57** | **0.64** | **95** |
| 8 | 215 | 40 | 1:29 | 25 | 3 | 0.81 | 97 |
| (prior art) | | | | | | | |
| 9 (prior art) | every second | 40 | 1:41 | | 3.67 | 0.43 | 92 |
| **mean value** | | | | | **3.34** | **0.71** | **94** |

| **Gluing results** | | | | | | | |
|---|---|---|---|---|---|---|---|
| | | | | | **Class 3, middle joint** | | |
| Plate | Application | Piling + open, | Web time | Pressing | Shearing strength | | Splinter i.e. break in wood |
| No. | g/m² | min | min | min | X N/mm2 | Sx Standard deviation | X % of all breaks |
| 1 | 200 | 20 | 36 | 25 | 3.62 | 0.42 | 92 |
| 2 | all | 20 | 39 | | 3.34 | 0.58 | 100 |
| **mean value** | | | | | **3.52** | **0.48** | **95** |
| 3 | 200 all | 40 | 1:11 | 25 | 3.91 | 0.38 | 100 |
| 4 | 170 | 20 | 47 | 25 | 3.61 | 0.43 | 98 |
| 5 | all | 20 | 52 | | 3.95 | 0.23 | 99 |
| **mean value** | | | | | **3.82** | **0.35** | **99** |
| 6 | 150 | 20 | 1:19 | 25 | 3.89 | 0.37 | 93 |
| 7 | all | 20 | 1:30 | | 3.74 | 0.74 | 98 |
| **mean value** | | | | | **3.81** | **0.56** | **96** |
| 8 | 215 | 40 | 1:29 | 25 | 2.7 | 0.87 | 93 |
| 9 | norm | 40 | 1:41 | | 3.26 | 0.22 | 92 |
| **mean value** | | | | | **2.98** | **0.67** | **93** |

| **2. gluing** | | | | | |
|---|---|---|---|---|---|
| | **Gluing 2 pieces with mixture 1** | | | | |
| | Assembly | 13 * 1.4 mm birch veneer | | | |
| | Moisture | about 3% | | | |
| | Gluing | **All veneers glued** | | | |
| | | **1. gluing g/m²** | | | |
| | Prepressing | 0.8 MPa / 8 min | | | |
| | Web time | 0.5-1 h | | | |
| | Hot pressing | 125°C | 1.8 MPa | 1.1 MPa | 0.4 MPa |
| | **Total time** | **25 min** | 8 min | 13 min | 4 min |
| | | **18 min** | 7 min | 8 min | 3 min |
| | | **13 min** | 6 min | 5 min | 2 min |

| **Veneer impregnation** | | | | | | | | | |
|---|---|---|---|---|---|---|---|---|---|
| **Test 6: Glue composition (materials as weight fractions)** | | | | | | | | | |
| | | | | | | | | | |
| Resin viscosity Fc/6 s/20°C | | **Mixture 0** | **Mixture 0** | **Mixture 1** | **Mixture 2** | **Mixture 2** | **Mixture 3** | **Mixture 4** | **Mixture 5** |
| PF resin | | 1,000 | 1,000 | 400 | 500 | 500 | | | 1,000 |
| | 14.5 | | | | | | | | |
| PF resin | | | | 400 | 400 | 400 | | | |
| | 14.6 | | | | | | | | |
| MF resin | 21 | | | | | | 1,000 | | |
| PRF resin | | | | | | | | 1,000 | |
| PRF curer | | | | | | | | 20 | |
| Soy flour | | | | | | | 60 | | |
| Filler | | 227.1 | 227.1 | 94.8 | 203.5 | 203.5 | | | 100 |
| Water | | 260 | 270 | 30 | 85 | 95 | | | |
| Total | | 1,487.1 | 1,497.1 | 1,124.8 | 1,203.5 | 1,213.5 | 1,060 | 1,020 | 1,100 |
| Resin % | | 33 | 32.7 | 47.3 | 43.8 | 43.4 | 57.5 | 57.8 | 44.5 |
| Viscosity Fc 6 / 25°C | | 25-35 | | | | | | | |
| **Gluing viscosity (2h)** | | **43.1** | **37.9** | **31.9** | **38.5** | **33.3** | **35.3** | 42.3 | 42.2 |

| **Veneer impregnation** | | | | | | | | |
|---|---|---|---|---|---|---|---|---|
| **Test 6: Gluing conditions** | | | | | | | | |
| | | | | | | | | |
| | **MIXTURES 1-5** | | | | **MIXTURE 0** | | | |
| Assembly | 13 * 1.4 mm birch veneer | | | | | | | |
| Moisture | about 3% | | | | | | | |
| Gluing | **All veneers glued (invention)** | | **Surface veneers not glued** | | Every second veneer glued | | | |
| | **200 g/m²** | | | | **155 g/m²** | | | |
| Piling + open | 20 min | | | | 20 min | | | |
| Prepressing | 0.8 MPa / 8 min | | | | 0.8 MPa / 8 min | | | |
| Web time | 0.5-1 h | | | | 0.5-1 h | | | |
| Hot pressing | 125°C | 1.8 MPa | 1.1 MPa | 0.4 MPa | 128°C | 1.8 MPa | 1.1 MPa | 0.4 MPa |
| | 25 min | 8 min | 13 min | 4 min | 15 min | 6 min | 7 min | 2 min |
| | | | | | | | | |

| **Test 6: Test results** | | | | | | | | | | |
|---|---|---|---|---|---|---|---|---|---|---|
| | Plate No. | Application g/m² | Hot pressing time (min) | Testing point | **Class 3, middle joint** | | | | Strength % | Prepressing bond |
| Mixture | | | | | Shearing strength | | Splinter | | | |
| | | | | | X | Sx | X | Sx | | |
| | | | | | N/m m² | SD | Break in wood % of all breaks | SD | | |
| Mixture 0 | 1-4 | 155 | 13 | 1. surface | 2.55 | 0.73 | 94 | 10 | 100 | 5 |
| (prior art) | | | | middle joint | 2.2 | 0.76 | 90 | 12 | 100 | |
| 1 (PF resin) | 5-8 | 200 | 25 | 1. surface | 3.19 | 0.36 | 82 | 35 | 125 | 1-3 |
| | | | | middle joint | 2.96 | 0.43 | 46 | 48 | 135 | |
| 2 (PF resin) | 9-12 | 200 | 25 | 1. surface | 3.26 | 0.57 | 57 | 46 | 128 | 1-2 |
| | | | | middle joint | 2.97 | 0.39 | 23 | 34 | 135 | |
| 3 (MF resin) | 13-14 | 200 | 25 | 1. surface | 3.58 | 0.42 | 100 | 0 | 140 | 2 |
| | | | | middle joint | 3.55 | 0.58 | 100 | 0 | 161 | |
| 4 (PRF resin) | 15-16 | 200 | 25 | 1. surface | ope n | | | | | 1 |
| | | | | middle joint | split | | | | | Plate 15 |
| 5 (PF resin) | 17-18 | 180 | 25 | 1. surface | 3.18 | 0.33 | 98 | 6 | 125 | 5 |
| | | | | middle joint | 2.51 | 0.41 | 99 | 3 | 114 | |

## Claims

1. A method for preparing a wood veneer plate, in which method, applying resin on not pre-impregnated wood veneer surfaces, piling the wood veneers on top of each other and hot-pressing together for curing the resin, **characterised by** applying the resin on surfaces which face each other when piled such that the resin is applied on at least 50%, advantageously at least 75%, most advantageously 100% of the surfaces facing each other when piled.

2. A method according to claim 1, **characterised by** applying 100-300 g/m², advantageously 155-175 g/m² of resin on surfaces facing each other when piled.

3. A method according to claim 1 or 2, **characterised by** the thickness of wood veneers being 0.5-5.0 mm, advantageously 1.0-3.5 mm.

4. A method according to any one of preceding claims, **characterised by** the number of wood veneers being 3-70, advantageously 12-24.

5. A method according to any one of preceding claims, **characterised by** the wood veneers being of material which is chosen from birch, aspen, pine, spruce or other wood species suitable for the method, and being advantageously birch.

6. A method according to any one of preceding claims, **characterised by** applying resin on the wood veneer surfaces by spraying, casting, foaming, using liquid extrusion and/or by using rolls, advantageously by using rolls.

7. A method according to any one of preceding claims, **characterised by** the resin being phenolic resin, phenol resorcinol resin, melamine resin or urea melamine resin, advantageously melamine resin or urea melamine resin, most advantageously melamine resin.

8. A method according to claim 7, **characterised by** the melamine resin being in the form of such aqueous solution the solids content of which is 45-70% by weight, advantageously 55-65% by weight.

9. A method according to claim 7 or 8, **characterised by** the mole ratio of formaldehyde and melamine in the melamine resin being between 1.4-3.0.

10. A method according to claim 7, 8 or 9, **characterised by** having modified the melamine resin with acetoguanamine, caprolactam, urea and/or glycol.

11. A method according to any one of preceding claims, **characterised by** the resin containing a filler.

12. A method according to any one of preceding claims, **characterised by** choosing the filler from a group which includes chalk, kaoline, wood flour, cellulose, starch and protein, and being advantageously soy flour.

13. A method according to claim 11 or 12, **characterised by** choosing the amounts of clean resin, water and filler such that the viscosity of resin being applied is between 10-60 s (Ford cup 6/20°C).

14. A method according to any one of preceding claims, **characterised by** the resin containing anti-microbe, anti-insect, anti-moisture and fire-resistant materials.

## Patentansprüche

1. Ein Verfahren zur Vorbereitung einer Holzfurnierplatte durch Auftragen von Harz auf nicht imprägnierte Holzfurnierflächen, Aufeinanderschichten des Holzfurniers und Wärmeverpressung zwecks Aushärtung des Harzes, **dadurch gekennzeichnet, dass** das Harz auf den nach dem Aufeinanderschichten einander gegenüber liegenden Flächen auf mindestens 50%, vorteilhafterweise mindestens 75%, sehr vorteilhafterweise 100% der nach dem Aufeinanderschichten einander gegenüber liegenden Flächen aufgetragen wird.

2. Ein Verfahren nach Anspruch 1, **dadurch gekennzeichnet, dass** 100-300 g/m², vorteilhafterweise 155-175 g/m² Harz auf die nach dem Aufeinanderschichten einander gegenüber liegenden Flächen aufgetragen wird.

3. Ein Verfahren nach Anspruch 1 oder 2, **dadurch gekennzeichnet, dass** die Dicke des Holzfurniers 0,5-5,0 mm, vorteilhafterweise 1,0-3,5 mm beträgt.

4. Ein Verfahren nach einem der vorstehenden Ansprüche, **dadurch gekennzeichnet, dass** die Anzahl der Holzfurniere 3-70, vorteilhafterweise 12-24 beträgt.

5. Ein Verfahren nach einem der vorstehenden Ansprüche, **dadurch gekennzeichnet, dass** das Holzfurnier aus von Birken, Espen, Tannen, Fichten oder sonstigen für das Verfahren geeigneten Baumarten gewähltem Holz besteht, vorteilhafterweise Birkenholz.

6. Ein Verfahren nach einem der vorstehenden Ansprüche, **dadurch gekennzeichnet, dass** das Harz auf die Holzfurnierflächen gesprüht, gegossen, geschäumt, durch Flüssigkeitsextrusion oder mit Rollen aufgetragen wird, vorteilhafterweise mit Rollen.

7. Ein Verfahren nach einem der vorstehenden Ansprüche, **dadurch gekennzeichnet, dass** es sich bei dem Harz um Phenolharz, Phenol-Resorcinharz, Melaminharz oder Harnstoff-Melaminharz, vorteilhafterweise um Melamin- oder Harnstoff-Melaminharz und am vorteilhaftesten um Melaminharz, handelt.

8. Ein Verfahren nach Anspruch 7, **dadurch gekennzeichnet, dass** es sich bei dem Melaminharz um eine wässrige Lösung handelt, deren Feststoffanteil 45-70%, vorteilhafterweise jedoch 55-65% Gewichtsprozent darstellt.

9. Ein Verfahren nach Anspruch 7 oder 8, **dadurch gekennzeichnet, dass** das Molverhältnis des Formaldehyds und des Melamins im Melaminharz 1,4-3,0 beträgt.

10. Ein Verfahren nach Anspruch 7, 8 oder 9, **dadurch gekennzeichnet, dass** das Melamin durch Acetoguanamin, Caprolactam, Harnstoff und/oder Glycol modifiziert wird.

11. Ein Verfahren nach einem der vorstehenden Ansprüche, **dadurch gekennzeichnet, dass** das Harz einen Füllstoff enthält.

12. Ein Verfahren nach einem der vorstehenden Ansprüche, **dadurch gekennzeichnet, dass** der Füllstoff aus seiner Gruppe gewählt wird, die Kalk, Kaolin, Holzmehl, Zellulose, Stärke und Proteine, vorteilhafterweise jedoch Sojamehl, umfasst.

13. Ein Verfahren nach Anspruch 11 oder 12, **dadurch gekennzeichnet, dass** reiner Harz, Wasser und Füllstoff in solchen Mengen gewählt werden, dass die Viskosität des aufzutragenden Harzes 10-60 s (Ford-Becher 6/20°C) beträgt.

14. Ein Verfahren nach einem der vorstehenden Ansprüche, **dadurch gekennzeichnet, dass** das Harz antimikrobielle, Insektenschutz-, feuchtigkeitsabweisende und feuerbeständige Materialien enthält.

## Revendications

1. Procédé de préparation d'une plaque de placage en bois, dans lequel procédé on applique de la résine sur des surfaces de placage en bois non pré-imprégnées, on empile les placages de bois l'un sur l'autre et l'on presse à chaud conjointement pour durcir la résine, **caractérisé en ce que** l'on applique la résine sur des surfaces en regard l'une de l'autre lorsqu'elles sont empilées de sorte que la résine soit appliquée sur au moins 50 %, avantageusement sur au moins 75 %, très avantageusement sur 100 % des surfaces en regard l'une de l'autre lorsqu'elles sont empilées.

2. Procédé selon la revendication 1, **caractérisé en ce que** l'on applique 100 à 300 g/m², avantageusement 155 à 175 g/m², de résine sur des surfaces en regard l'une de l'autre lorsqu'elles sont empilées.

3. Procédé selon la revendication 1 ou la revendication 2, **caractérisé en ce que** l'épaisseur des placages de bois est de 0,5 à 5,0 mm, avantageusement de 1,0 à 3,5 mm.

4. Procédé selon l'une quelconque des revendications précédentes, **caractérisé en ce que** le nombre de placages de bois est de 3 à 70, avantageusement de 12 à 24.

5. Procédé selon l'une quelconque des revendications précédentes, **caractérisé en ce que** les placages de bois sont constitués d'un matériau qui est choisi parmi le bouleau, le tremble, le pin, l'épicéa ou une autre espèce de bois convenant au procédé, avantageusement le bouleau.

6. Procédé selon l'une quelconque des revendications précédentes, **caractérisé en ce qu'**on applique la résine sur les surfaces de placage en bois par pulvérisation, coulée, moussage, en utilisant une extrusion de liquide et/ou en utilisant des rouleaux, avantageusement en utilisant des rouleaux.

7. Procédé selon l'une quelconque des revendications précédentes, **caractérisé en ce que** la résine est une résine phénolique, une résine de phénol résorcinol, une résine de mélamine ou une résine d'urée mélamine, avantageusement une résine de mélamine ou une résine d'urée mélamine, très avantageusement une résine de mélamine.

8. Procédé selon la revendication 7, **caractérisé en ce que** la résine de mélamine se présente sous la forme d'une solution aqueuse dont la teneur en solides est de 45 à 70 % en poids, avantageusement de 55 à 65 % en poids.

9. Procédé selon la revendication 7 ou la revendication 8, **caractérisé en ce que** le rapport molaire du formaldéhyde et de la mélamine dans la résine de mélamine se situe dans une plage de 1,4 à 3,0.

10. Procédé selon la revendication 7, 8 ou 9, **caractérisé en ce que** l'on modifie la résine de mélamine par de l'acétoguanamine, du caprolactame, de l'urée et/ou du glycol.

11. Procédé selon l'une quelconque des revendications précédentes, **caractérisé en ce que** la résine contient une charge.

12. Procédé selon l'une quelconque des revendications précédentes, **caractérisé en ce que** l'on choisit la charge dans un groupe comprenant de la chaux, du kaolin, de la farine de bois, de la cellulose, de l'amidon et une protéine, avantageusement de la farine de soja.

13. Procédé selon la revendication 11 ou la revendication 12, **caractérisé en ce que** l'on choisit les quantités de résine propre, d'eau et de charge de sorte que la viscosité de la résine appliquée se situe dans une plage de 10 à 60 s (Ford cup 6/20 °C).

14. Procédé selon l'une quelconque des revendications précédentes, **caractérisé en ce que** la résine contient des matériaux antimicrobiens, anti-insectes, anti-humidité et résistant au feu.
